# EUROPÄISCHE PATENTSCHRIFT

(11) **EP 4 384 724 B1**
(45) Veröffentlichungstag und Bekanntmachung des Hinweises auf die Patenterteilung: **02.09.2026**
(21) Anmeldenummer: 22760998.9
(22) Anmeldetag: 08.08.2022
(51) Int. Cl.: F16C 17/02, F16C 33/04, F16C 33/10, F16C 33/20

(54) **RÜHRWERKVORRICHTUNG, RÜHRSYSTEM UND VERFAHREN ZUM BETRIEB EINES RÜHRSYSTEMS**
AGITATOR DEVICE, AGITATION SYSTEM AND METHOD FOR OPERATING AN AGITATION SYSTEM
DISPOSITIF D'AGITATION, SYSTÈME D'AGITATION ET PROCÉDÉ DE FONCTIONNEMENT D'UN SYSTÈME D'AGITATION

(30) Priorität: 13.08.2021 DE 102021121103
(43) Veröffentlichungstag der Anmeldung: 19.06.2024
(73) Patentinhaber: EKATO Rühr- und Mischtechnik GmbH, 79650 Schopfheim (DE)
(72) Erfinder: MULTNER, Benjamin, 79664 Wehr (DE); LAST, Wolfgang, 79539 Lörrach (DE)
(74) Vertreter: Daub, Thomas
(86) Internationale Anmeldenummer: PCT/EP2022/072245
(87) Internationale Veröffentlichungsnummer: WO 2023/016990

(56) Entgegenhaltungen:
- DE-A1- 102013 104 788
- US-B1- 9 151 326

## Beschreibung

### Stand der Technik

Die Erfindung betrifft ein Rührwerk nach dem Oberbegriff des Anspruchs 1, ein Rührsystem nach Anspruch 8 und ein Verfahren zum Betrieb eines Rührsystems nach Anspruch 10.

Aus dem Stand der Technik, so zum Beispiel DE 10 2013 104 788 A1, sind bereits Rührwerke bekannt, wobei eine Rührwelle des Rührwerks über zumindest ein Rührwerklager gelagert ist. Insbesondere bei sehr langen Rührwellen kann es zweckmäßig sein die Rührwelle über ein zusätzliches Zwischenlager in einem Rührbehälter zu lagern. Das Zwischenlager ist dabei in der Regel als Gleitlager zur Aufnahme radialer Kräfte ausgebildet und umfasst eine erste Lagerbuchse, welche fest mit einem Lagergehäuse verbunden ist, und eine zweite Lagerbuchse, welche mit der Rührwelle verbunden ist, wobei die Lagerbuchsen Laufpartner aufweisen, welche während eines Betriebs miteinander in Kontakt stehen. Da sich das Zwischenlager während des Betriebs innerhalb des zu rührenden Mediums, welches je nach Anwendung auch korrosive und/oder abrasive Eigenschaften haben sowie hohe Temperaturen aufweisen kann, befindet, ergeben sich besonders hohe Anforderungen an die Werkstoffe des Zwischenlagers, welche entsprechend der zu erwartenden erhöhten Erosions- und/oder Korrosionsbelastungen sowie entsprechenden Betriebstemperaturen auszulegen sind. Je nach Anwendung kommen bisher Lagerbuchsen zur Anwendung, deren Laufpartner aus glasfaserverstärktem Polytetrafluorethylen (PTFE) und/oder Edelstahl, welches für abrasive Bedingungen mit einer Hartschicht, beispielsweise aus Chromoxid oder Wolframcarbid versehen sein kann, ausgebildet sind. Bei erhöhten Betriebstemperaturen und/oder korrosivem Milieu kommen vorwiegend Lagerbuchsen mit Laufpartnern aus Kohle und/oder Graphit zum Einsatz. Für extreme Bedingungen, beispielsweise zum Rühren hochkonzentrierter Gipssuspensionen, können die Laufpartner beispielsweise aus Siliziumcarbid ausgebildet sein. Ein Nachteil aller bisher bekannten Zwischenlager zur Lagerung von Rührwellen in Rührbehältern ist, dass diese nicht für einen Trockenlauf ausgelegt sind, sodass bei einer Inbetriebnahme des Rührwerks, wenn keine hydrodynamische Schmierung zwischen den Laufpartnern durch das Medium vorhanden ist, zunächst Lagerbuchsen aus Kunststoff eingesetzt werden müssen, welche vor dem eigentlichen Betrieb durch die Lagerbuchsen aus den oben genannten Werkstoffen getauscht werden müssen, wodurch sich ein erheblicher Mehraufwand und somit Mehrkosten bei der Inbetriebnahme ergeben. Ferner zeigen herkömmliche Zwischenlager materialbedingt einen hohen Verschleiß, wodurch Laufzeiten verringert und ein Aufwand für Wartung und Reparatur der Zwischenlager erhöht ist. Zudem halten herkömmliche Zwischenlager für Hochtemperaturanwendungen mit Laufpartner aus Kohle und/oder Graphit nur sehr niedrigen Flächenpressungen stand, was eine große Bauhöhe der Zwischenlager erforderlich macht, um den auftretenden Flächenpressungen standzuhalten. Dies führt wiederum zu erheblichen Mehrkosten bei den weiteren Komponenten des Zwischenlagers, beispielsweise dem Lagergehäuse, welche oftmals aus chemisch besonders beständigen und somit teuren Werkstoffen, beispielsweise Titan, hergestellt sind.

Die Aufgabe der Erfindung besteht insbesondere darin, eine gattungsgemäße Vorrichtung mit vorteilhaften Eigenschaften hinsichtlich einer Effizienz bereitzustellen. Die Aufgabe wird erfindungsgemäß durch die Merkmale der Ansprüche 1, 8 und 9 gelöst, während vorteilhafte Ausgestaltungen und Weiterbildungen der Erfindung den Unteransprüchen entnommen werden können.

### Vorteile der Erfindung

Die Erfindung geht aus von einem Rührwerk mit zumindest einem Zwischenlager, welches zur Lagerung einer Rührwelle innerhalb eines Rührbehälters vorgesehen ist und welches ein erstes Lagerelement und ein zweites Lagerelement aufweist, welches in einem Betriebszustand relativ zu dem ersten Lagerelement um eine Lagerachse drehbar ist und mit dem ersten Lagerelement in Kontakt steht.

Es wird vorgeschlagen, dass zumindest eines der Lagerelemente polykristallinen Diamant aufweist.

Durch eine derartige Ausgestaltung kann vorteilhaft ein Rührwerk mit verbesserter Effizienz bereitgestellt werden. Es kann insbesondere ein Rührwerk mit einer besonders hohen mechanischen Belastbarkeit und einer besonders guten chemischen Beständigkeit bereitgestellt werden, wodurch vorteilhaft lange Laufzeiten und ein wartungsarmer Betrieb erreicht werden können. Aufgrund der sehr hohen mechanischen Belastbarkeit von polykristallinem Diamant kann zudem vorteilhaft ein Zwischenlager mit einer, gegenüber bisher bekannten Zwischenlagern, verringerten Bauhöhe bereitgestellt werden. Hierdurch kann vorteilhaft eine Materialeffizienz verbessert werden, insbesondere indem weitere Komponenten des Zwischenlagers, beispielsweise ein Lagergehäuse, welche in einem Betriebszustand mit innerhalb eines Rührbehälters befindlichen Medien in Kontakt stehen und dementsprechend je nach Anwendung aus chemisch besonders beständigen und somit teilweise sehr teuren Werkstoffen, beispielsweise Titan, hergestellt sein müssen, entsprechend kleiner dimensioniert werden können.

Unter einer "Rührwerkvorrichtung" soll zumindest ein Teil und/oder eine Baugruppe, insbesondere eine Unterbaugruppe, eines Rührsystems, insbesondere eines Reaktors, verstanden werden. Die Rührwerkvorrichtung kann auch das gesamte Rührsystem umfassen.

Das Zwischenlager ist zur Lagerung der Rührwelle innerhalb eines Rührbehälters vorgesehen und weist das erste Lagerelement, das zweite Lagerelement und ein Lagergehäuse auf. Das Zwischenlager kann darüber hinaus weitere Bauteile aufweisen. Das zweite Lagerelement ist in dem Betriebszustand um die Lagerachse relativ zu dem ersten Lagerelement drehbar, wobei die Lagerachse vorzugsweise parallel zu einer Drehachse der Rührwelle und besonders bevorzugt deckungsgleich mit der Drehachse der Rührwelle ist. Vorzugsweise ist das erste Lagerelement als ein stationäres Lagerelement ausgebildet und, insbesondere drehfest, mit dem Lagergehäuse verbunden. Das erste Lagerelement könnte stoffschlüssig mit dem Lagergehäuse verbunden, beispielsweise verschweißt, sein. Vorzugsweise ist das erste Lagerelement form- und/oder kraftschlüssig, und insbesondere lösbar, mit dem Lagergehäuse verbunden, beispielsweise über eine Schraubverbindung und/oder eine Nut-Feder-Verbindung und/oder eine Passfeder und/oder Befestigungsstifte und/oder dergleichen. Vorzugsweise ist das zweite Lagerelement als ein bewegliches Lagerelement ausgebildet und in einem montierten Zustand der Rührwerkvorrichtung mit der Rührwelle verbunden. Das zweite Lagerelement könnte in dem montierten Zustand stoffschlüssig mit der Rührwelle verbunden, beispielsweise an die Rührwelle angeschweißt, sein. Vorzugsweise ist das zweite Lagerelement in dem montierten Zustand form- und/oder kraftschlüssig, und insbesondere lösbar, mit der Rührwelle verbunden. Denkbar wäre beispielsweise, dass das zweite Lagerelement auf die Rührwelle aufgeschrumpft und hierdurch kraftschlüssig mit dieser verbunden ist. Besonders bevorzugt weist das Zwischenlager zu einer form- und/oder kraftschlüssigen Verbindung des zweiten Lagerelements mit der Rührwelle jedoch eine Wellenhülse auf, wobei das zweite Lagerelement in dem montierten Zustand mit einer ersten Seite in axialer Richtung der Rührwelle an einem Wellenabsatz der Rührwelle anliegt und sich die Wellenhülse auf einer der ersten Seite gegenüberliegenden zweiten Seite in axialer Richtung der Rührwelle an das zweite Lagerelement anschließt und dieses in axialer Richtung in Position hält. Die Wellenhülse ist vorzugsweise mit dem Lagergehäuse verbunden, beispielsweise mittels einer Schraubverbindung oder dergleichen. Das erste Lagerelement weist einen ersten Grundkörper und zumindest ein erstes Kontaktelement, vorzugsweise eine Vielzahl von ersten Kontaktelementen, auf. Das zweite Lagerelement weist einen zweiten Grundkörper und zumindest ein zweites Kontaktelement, vorzugsweise eine Vielzahl von zweiten Kontaktelementen, auf. Das erste Kontaktelement des ersten Lagerelements und das zweite Kontaktelement des zweiten Lagerelements sind dazu vorgesehen, in dem Betriebszustand eine Relativbewegung, insbesondere eine Drehbewegung um die Lagerachse, zueinander auszuführen und dabei zumindest zeitweise miteinander in Kontakt zu stehen. Das erste Lagerelement, insbesondere das zumindest eine erste Kontaktelement des ersten Lagerelements, und das zweite Lagerelement, insbesondere das zumindest eine zweite Kontaktelement des zweiten Lagerelements, können in dem Betriebszustand unmittelbar oder mittelbar, das heißt im Falle hydrostatischer oder hydrodynamischer Schmierung über einen Schmierfilm aus Schmiermittel, in Kontakt stehen. Die Kontaktelemente der jeweiligen Lagerelemente könnten einstückig mit dem jeweiligen Grundkörper des jeweiligen Lagerelements ausgebildet sein und beispielsweise einen Teil einer Oberfläche des jeweiligen Grundkörpers ausbilden und/oder als eine Beschichtung auf dem jeweiligen Grundkörper aufgebracht sein. Unter "einstückig" soll zumindest stoffschlüssig verbunden verstanden werden, beispielsweise durch einen Schweißprozess, einen Klebeprozess, einen Anspritzprozess, einen Beschichtungsprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und vorteilhaft aus einem einzelnen Rohling. Vorzugsweise sind die jeweiligen Kontaktelemente separat von dem jeweiligen Grundkörper ausgebildet und fest mit dem jeweiligen Grundkörper verbunden, beispielsweise form- und/oder kraftschlüssig in entsprechende Ausnehmungen in dem Grundkörper eingepresst. Das erste Lagerelement und/oder das zweite Lagerelement weisen polykristallinen Diamant auf und könnten insbesondere vollständig aus polykristallinem Diamant ausgebildet sein. Vorzugsweise ist der erste Grundkörper des ersten Lagerelements und/oder der zweite Grundkörper des zweiten Lagerelements jedoch aus einem von polykristalinem Diamant verschiedenen Material, beispielsweise aus einem Metall und/oder einer Metalllegierung, wie z.B. Edelstahl oder Titan oder Hastelloy, bevorzugt Titan, ausgebildet. Vorzugsweise ist das zumindest eine erste Kontaktelement des ersten Lagerelements und/oder das zumindest eine zweite Kontaktelement des zweiten Lagerelements aus polykristallinem Diamant ausgebildet. Mit "polykristallinem Diamant" (PKD, engl. PCD) ist in dem vorliegenden Dokument ein, insbesondere mittels eines Sinterprozesses bei hohem Druck und hoher Temperatur, synthetisch hergestellter Werkstoff gemeint, welcher eine Metallmatrix, beispielsweise aus Cobalt, aufweist, in welcher eine miteinander verwachsene Struktur von, insbesondere synthetisch hergestellten, Diamantpartikeln angeordnet ist.

Unter "zumindest im Wesentlichen" soll in dem vorliegenden Dokument verstanden werden, dass eine Abweichung von einem vorgegebenen Wert weniger als 25%, vorzugsweise weniger als 10% und besonders bevorzugt weniger als 5% des vorgegebenen Werts beträgt.

In dem vorliegenden Dokument dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "vorgesehen" soll speziell ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Das erste Lagerelement oder das zweite Lagerelement könnte ohne polykristallinen Diamant ausgebildet sein. Beispielsweise wäre denkbar, dass das erste Kontaktelement des ersten Lagerelements oder das zweite Kontaktelement des zweiten Lagerelements aus demselben Material hergestellt ist wie der jeweilige Grundkörper des jeweiligen Lagerelements. Denkbar wäre auch, dass das erste Kontaktelement des ersten Lagerelements oder das zweite Kontaktelement des zweiten Lagerelements aus einem von polykristallinem Diamant verschiedenen Material, beispielsweise aus Polytetrafluorethylen (PTFE) und/oder aus Wolframcarbid oder/oder Chromoxid und/oder aus Siliciumcarbid und/oder aus Bornitrid und/oder einem anderen, einem Fachmann als sinnvoll erscheinenden Werkstoff, ausgebildet ist. In einer vorteilhaften Ausgestaltung wird jedoch vorgeschlagen, dass beide Lagerelemente polykristallinen Diamant aufweisen. Hierdurch kann vorteilhaft ein Zwischenlager mit einer besonders hohen mechanischen Belastbarkeit bereitgestellt werden. Somit kann vorteilhaft eine Effizienz der Rührwerkvorrichtung weiter gesteigert und eine besonders lange Laufzeit des Zwischenlagers erreicht werden. Vorzugsweise sind das zumindest eine erste Kontaktelement des ersten Lagerelements und das zumindest eine zweite Kontaktelement des zweiten Lagerelements jeweils aus polykristallinem Diamant ausgebildet.

Zudem wird vorgeschlagen, dass das Zwischenlager zu einem Trockenlauf ausgelegt ist. Durch eine derartige Ausgestaltung kann eine Effizienz weiter verbessert werden. Es kann insbesondere eine vereinfachte und schnelle Inbetriebnahme eines Rührsystems mit einer Rührwerkvorrichtung erreicht werden, wenn das Zwischenlager zu einem Trockenlauf ausgelegt ist, da das Zwischenlager im Trockenlauf, ohne hydrostatische oder hydrodynamische Schmierung zwischen den Lagerelementen, in Betrieb genommen werden kann, und somit ein ansonsten erforderlicher Einsatz und anschließender Austausch von Lagerbuchsen aus Kunststoff bei der Inbetriebnahme entfällt. Im Trockenlauf stehen das zumindest eine erste Kontaktelement des ersten Lagerelements und das zumindest eine zweite Kontaktelement des zweiten Lagerelements zumindest zeitweise in unmittelbarem mechanischen Kontakt, das heißt ohne, dass sich ein Schmierfilm zwischen dem ersten Kontaktelement und dem zweiten Kontaktelement befindet. Das Zwischenlager ist darüber hinaus zu einem Nasslauf ausgelegt, wobei sich ein Schmierfilm zwischen den Kontaktelementen befindet. Vorzugsweise ist das Zwischenlager als ein hydrodynamisches Gleitlager ausgebildet, wobei in dem Betriebszustand ein Schmierfilm zwischen dem ersten Kontaktelement des ersten Lagerelements und dem zweiten Kontaktelement des zweiten Lagerelements durch ein innerhalb des Rührbehälters befindliches Medium ausgebildet wird. Denkbar ist alternativ grundsätzlich auch, dass das Zwischenlager als ein hydrostatisches Gleitlager ausgebildet ist und zumindest einen Schmierstoffkreislauf mit einer Pumpe, zur Zufuhr eines von dem Medium in dem Rührbehälter verschiedenen Schmiermittels in einen Lagerspalt zwischen dem ersten Lagerelement und dem zweiten Lagerelement, aufweist.

Darüber hinaus wird vorgeschlagen, dass ein Reibungskoeffizient zwischen dem ersten Lagerelement und dem zweiten Lagerelement im Trockenlauf höchstens 0,08 beträgt. Hierdurch kann vorteilhaft ein Trockenlauf mit besonders geringem Reibverschleiß ermöglicht werden. Es kann somit ein besonders zuverlässiges und langlebiges Zwischenlager bereitgestellt werden. Insbesondere beträgt der Reibungskoeffizient zwischen dem ersten Lagerelement und dem zweiten Lagerelement im Trockenlauf höchstens 0,07, vorteilhaft höchstens 0,06, besonders vorteilhaft höchstens 0,05, vorzugsweise höchstens 0,04 und besonders bevorzugt höchstens 0,03. In dem Nasslauf bei hydrodynamischer Schmierung ist der Reibungskoeffizient zwischen dem ersten Lagerelement und dem zweiten Lagerelement vernachlässigbar gering und beträgt insbesondere höchstens 0,002.

Des Weiteren wird vorgeschlagen, dass das erste Lagerelement und das zweite Lagerelement eine Druckfestigkeit von zumindest 5,0 GPa aufweisen. Durch eine derartige Ausgestaltung kann vorteilhaft ein Zwischenlager bereitgestellt werden, welches einer besonders hohen Flächenpressung standhält, wodurch eine Bauhöhe des Zwischenlagers gegenüber herkömmlichen Zwischenlagern für Hochtemperaturanwendungen mit Kontaktelementen aus Kohle und/oder Grafit signifikant reduziert werden kann. Hierdurch ergeben sich weiterhin vorteilhaft Material- und somit Kostenersparnisse, insbesondere indem das Zwischenlager insgesamt kleiner dimensioniert werden kann und somit Materialkosten für weitere Komponenten des Zwischenlagers, beispielsweise für das Lagergehäuse, entsprechend geringer ausfallen. Das erste Lagerelement und das zweite Lagerelement weisen insbesondere eine Druckfestigkeit von zumindest 5,5 GPa, vorteilhaft von zumindest 6 GPa, besonders vorteilhaft von zumindest 6,5 GPa, vorzugsweise von zumindest 7,0 GPa und besonders bevorzugt von zumindest 7,5 GPa auf.

Ferner wird vorgeschlagen, dass das erste Lagerelement und das zweite Lagerelement eine Wärmeleitfähigkeit von zumindest 400 W/mK aufweisen. Hierdurch kann vorteilhaft eine besonders gute Wärmeabfuhr erreicht werden. Es kann vorteilhaft, insbesondere beim Starten und Stoppen einer Drehbewegung der Rührwelle sowie im Trockenlauf, die Wahrscheinlichkeit von ungewolltem lokalen Reibschweißen zwischen den Kontaktelementen des ersten und zweiten Lagerelements, was zu Riefenbildung und Abrieb führt, reduziert, vorzugsweise minimiert, werden. Es kann somit eine Langlebigkeit des Zwischenlagers weiter verbessert und ein besonders effizienter Betrieb ermöglicht werden. Das erste Lagerelement und das zweite Lagerelement weisen insbesondere eine Wärmeleitfähigkeit von zumindest 425 W/mK, vorteilhaft von zumindest 450 W/mK, besonders vorteilhaft von zumindest 475 W/mK, vorzugsweise von zumindest 500 W/mK und besonders bevorzugt von zumindest 525 W/mK auf.

Zudem wird vorgeschlagen, dass das Zwischenlager eine Hitzebeständigkeit von zumindest 250°C aufweist. Hierdurch kann vorteilhaft eine Rührwerkvorrichtung für einen zuverlässigen Einsatz bei Hochtemperaturanwendungen, beispielsweise zur Durchführung von Rührprozessen und/oder chemischen Reaktionen bei hohen Temperaturen, bereitgestellt werden. Das Zwischenlager weist insbesondere eine Hitzebeständigkeit von zumindest 260°C, vorteilhaft von zumindest 270°C, besonders vorteilhaft von zumindest 280°C, vorzugsweise von zumindest 290°C und besonders bevorzugt von zumindest 300°C auf. Der Ausdruck "Hitzebeständigkeit" meint hier und im Folgenden die Widerstandsfähigkeit eines Objekts, insbesondere eines Materials und/oder Bauteils, gegenüber Temperatureinwirkungen und ist durch eine Temperatur charakterisiert, unterhalb derer sich temperaturabhängige Eigenschaften des Objekts nur unwesentlich und nur im Rahmen der für die jeweilige Anwendung des Objekts zulässigen Toleranzen verändern.

Des Weiteren wird vorgeschlagen, dass das Zwischenlager als ein Radiallager ausgebildet ist, wobei das erste Lagerelement als ein stationärer Außenring und das zweite Lagerelement als ein beweglicher Innenring ausgebildet ist. Durch eine derartige Ausgestaltung kann vorteilhaft ein zuverlässiges Zwischenlager zur Aufnahme radialer Kräfte mit besonders einfachen technischen Mitteln bereitgestellt werden. Alternativ könnte das Zwischenlager grundsätzlich auch als ein Radial- und Axiallager ausgebildet sein, wobei das erste Lagerelement zumindest ein erstes radiales Kontaktelement zur Aufnahme radialer Kräfte und zumindest ein zu dem ersten radialen Kontaktelement senkrecht angeordnetes erstes axiales Kontaktelement zur Aufnahme axialer Kräfte und das zweite Lagerelement zumindest ein zweites radiales Kontaktelement zur Aufnahme radialer Kräfte und zumindest ein zu dem zweiten radialen Kontaktelement senkrecht angeordnetes zweites axiales Kontaktelement aufweisen könnte.

Die Erfindung betrifft ferner ein Rührsystem, insbesondere einen Reaktor, mit einem Rührbehälter und einer in dem Rührbehälter angeordneten Rührwerkvorrichtung nach einer der vorhergehend beschriebenen Ausgestaltungen. Ein derartiges Rührsystem zeichnet sich insbesondere durch die vorhergenannten vorteilhaften Eigenschaften der Rührwerkvorrichtung aus. Das Rührsystem kann neben dem Rührbehälter und der Rührwerkvorrichtung weitere Einheiten und/oder Elemente aufweisen. Vorzugsweise weist das Rührsystem ein Rührwerk auf, welches die Rührwerkvorrichtung mit umfasst, und welches darüber hinaus, ohne darauf beschränkt zu sein, die Rührwelle, eine Antriebseinheit mit einem Antriebsmotor zum Antrieb der Rührwelle und zumindest ein an der Rührwelle angeordnetes Rührorgan aufweist.

Die Erfindung betrifft außerdem ein Verfahren zum Betrieb des vorhergehend beschriebenen Rührsystems, wobei der Rührbehälter mit einem korrosiven und/oder abrasiven Medium gefüllt ist. Mittels eines derartigen Verfahrens kann vorteilhaft ein zuverlässiger Betrieb des Rührsystems auch bei besonders hohen Anforderungen an eine mechanische und/oder chemische Belastbarkeit, insbesondere bei erhöhter Erosions- und/oder Korrosionsbelastung, des Rührsystems, insbesondere der Rührwerkvorrichtung, erreicht werden. Das Verfahren zum Betrieb des Rührsystems, kann, ohne darauf beschränkt zu sein, beispielsweise bei der Produktion von Terephthalsäure, wobei als korrosives Medium Essigsäure als Lösungsmittel zum Einsatz kommt, oder bei der Aufbereitung von Erzen, beispielsweise zur hydrometallurgischen Gewinnung von Zink, Nickel oder Kupfer unter Verwendung von Schwefelsäure, wobei das Medium neben korrosiven Eigenschaften aufgrund von darin suspendierten Erzpartikeln auch abrasiv sein kann, zum Einsatz gebracht werden.

Zudem wird vorgeschlagen, dass das Medium eine Temperatur von zumindest 180°C aufweist. Hierdurch kann vorteilhaft ein zuverlässiger Betrieb des Rührsystems auch bei hohen Anforderungen an eine Temperaturbeständigkeit des Rührsystems, insbesondere der Rührwerkvorrichtung, ermöglicht werden. Vorzugsweise weist das Medium eine Temperatur zwischen 190°C und 210°C auf. Das Medium kann jedoch auch Temperaturen größer als 210°C aufweisen. So kann beispielsweise bei der Herstellung von Terephthalsäure eine Entfernung von Essigsäure und ein Lösen der rohen Terephthalsäure in Wasser bei Temperaturen von ca. 250°C erforderlich sein.

Die erfindungsgemäße Rührwerkvorrichtung und das erfindungsgemäße Rührwerksystem sollen hierbei nicht auf die oben beschriebenen Anwendungen und Ausführungsformen beschränkt sein. Insbesondere kann die erfindungsgemäße Rührwerkvorrichtung und/oder das erfindungsgemäße Rührwerksystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Rührsystem mit einem Rührbehälter und einer darin angeordneten Rührwerkvorrichtung in einer schematischen Darstellung,
- Fig. 2: die Rührwerkvorrichtung mit einem Zwischenlager in einer schematischen perspektivischen Ansicht,
- Fig. 3: das Zwischenlager in einer schematischen Schnittdarstellung,
- Fig. 4: ein erstes Lagerelement und ein zweites Lagerelement des Zwischenlagers in einer schematisch Explosionsdarstellung und
- Fig. 5: ein schematisches Verfahrensfließbild eines Verfahrens zum Betrieb des Rührsystems.

### Beschreibung des Ausführungsbeispiels

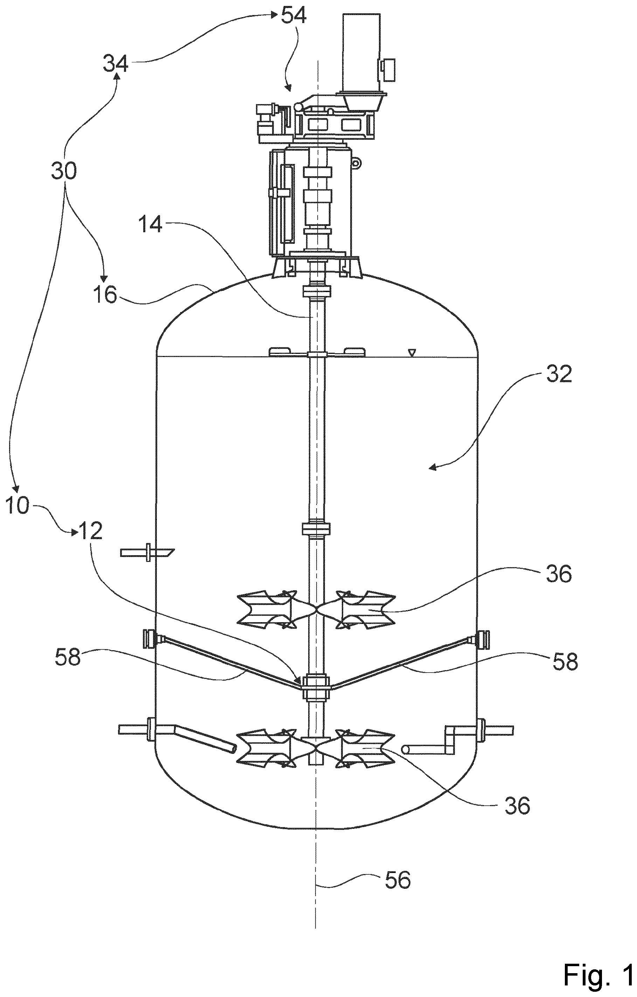

Fig. 1 zeigt ein Rührsystem 30. Das Rührsystem 30 ist als ein Reaktor, und zwar als ein Rührreaktor ausgebildet. Vorliegend ist das Rührsystem 30 beispielsweise zur Produktion von Terephthalsäure, einer Vorstufe von Polyestern, beispielsweise Polyethylenterephthalat (PET), vorgesehen. Neben der Produktion von Terephthalsäure kann das Rührsystem 30 jedoch auch für andere Anwendungen, beispielsweise zur hydrometallurgischen Aufbereitung von Erzen, vorgesehen sein.

Das Rührsystem 30 weist einen Rührbehälter 16 auf. Der Rührbehälter 16 ist zur Aufnahme zumindest eines Mediums 32 vorgesehen. Zur Produktion von Terephthalsäure kann das Medium in dem Rührbehälter 16 beispielsweise para-Xylol und Essigsäure als Lösungsmittel umfassen.

Das Rührsystem 30 umfasst ein Rührwerk 34 mit einer Rührwelle 14, einer Antriebseinheit 54 zum Antrieb der Rührwelle 14 und daran angeordneten Rührorganen 36 zur Durchmischung des Mediums 32. In einem Betriebszustand des Rührsystems 30 treibt die Antriebseinheit 34 die Rührwelle 14 zu einer Drehbewegung um eine Rührachse 56 an.

Das Rührsystem 30 umfasst eine Rührwerkvorrichtung 10. Die Rührwerkvorrichtung 10 ist in dem Rührbehälter 16 angeordnet.

Die Rührwerkvorrichtung 10 umfasst zumindest ein Zwischenlager 12. Das Zwischenlager 12 ist zur Lagerung der Rührwelle 14 innerhalb des Rührbehälters 16 vorgesehen. Das Zwischenlager 12 ist über Befestigungsstreben 58 mit dem Rührbehälter 16 verbunden.

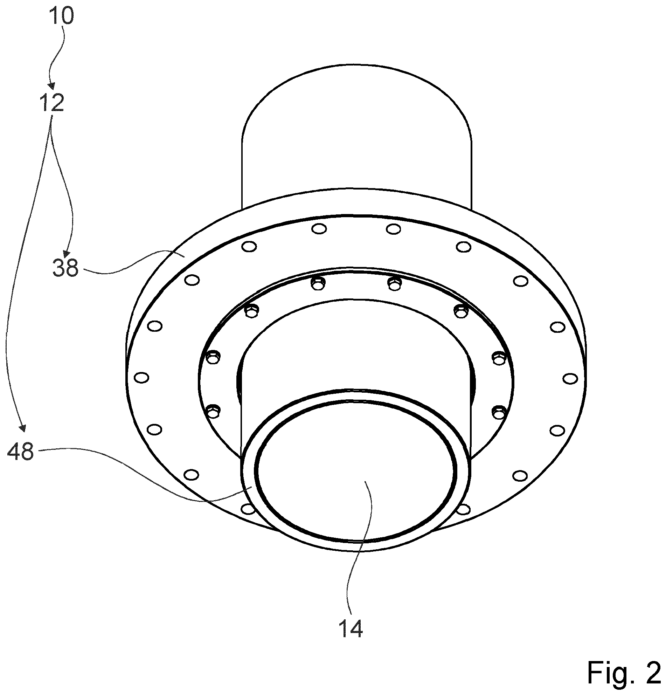

Figur 2 zeigt die Rührwerkvorrichtung 10 mit dem Zwischenlager 12 in einer schematischen perspektivischen Darstellung. Das Zwischenlager 12 weist ein Lagergehäuse 38 auf. Das Zwischenlager 12 weist eine Wellenhülse 48 auf, welche die Rührwelle 14 in einem montierten Zustand der Rührwerkvorrichtung 10 teilweise umgibt, und zwar radial entlang eines unterhalb des Lagergehäuses 38 verlaufenden Abschnitts der Rührwelle 14. Die Wellenhülse 48 ist mittels Schraubverbindungen lösbar mit dem Lagergehäuse 38 verbunden.

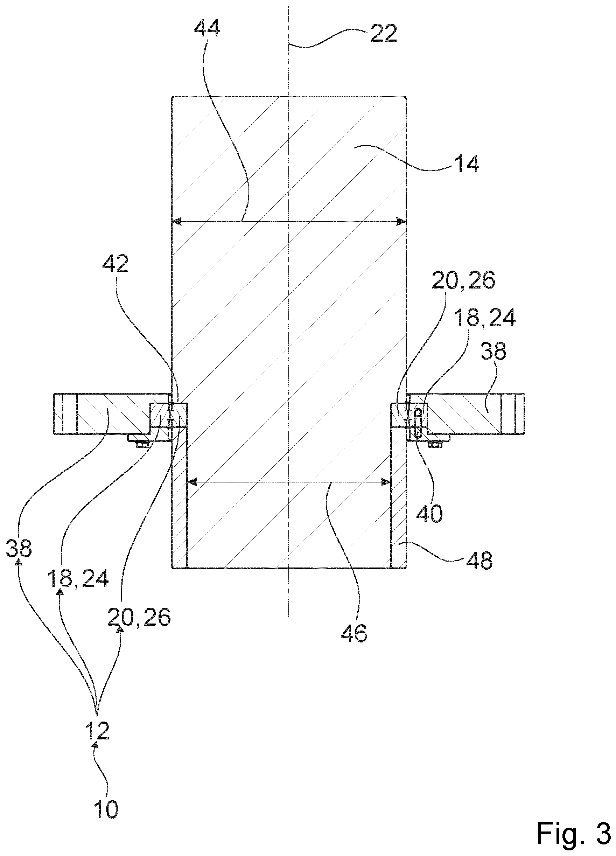

Figur 3 zeigt eine schematische Schnittansicht durch das Zwischenlager 12. Die Schnittebene der in der Figur 3 gezeigten Schnittansicht verläuft parallel zu einer Lagerachse 22 des Zwischenlagers 12. Vorliegend ist die Lagerachse 22 deckungsgleich mit der Rührachse 56 (vgl. Figur 1) der Rührwelle 14. Das Zwischenlager 12 weist ein erstes Lagerelement 18 und ein zweites Lagerelement 20 auf. Das zweite Lagerelement 20 ist in einem Betriebszustand der Rührwerkvorrichtung 10 relativ zu dem ersten Lagerelement 18 um die Lagerachse 22 drehbar. In dem Betriebszustand steht das zweite Lagerelement 20 mit dem ersten Lagerelement 18 in Kontakt.

Zumindest eines der Lagerelemente 18, 20 weist polykristallinen Diamant auf. Vorliegend weisen beide Lagerelemente 18, 20 polykristallinen Diamant auf.

Vorliegend ist das Zwischenlager 12 als ein Radiallager ausgebildet. Das erste Lagerelement 18 ist als ein stationärer Außenring 24 ausgebildet. Das als stationärer Außenring 24 ausgebildete erste Lagerelement 18 ist über Befestigungsstifte 40 in Umfangsrichtung um die Lagerachse 22 drehfest mit dem Lagergehäuse 38 verbunden. Das zweite Lagerelement 20 ist als ein beweglicher Innenring 26 ausgebildet. In einer in Bezug auf die Lagerachse 22 senkrechten Richtung ist das als beweglicher Innenring 26 ausgebildete zweite Lagerelement 20 innerhalb des als stationärer Außenring 24 ausgebildeten ersten Lagerelement 18 angeordnet.

Die Rührwelle 14 weist einen Wellenabsatz 42 auf. Die Rührwelle 14 weist oberhalb des Wellenabsatzes 42 einen ersten Wellendurchmesser 44 auf. Die Rührwelle 14 weist unterhalb des Wellenabsatzes 42 einen gegenüber dem ersten Wellendurchmesser 44 verringerten zweiten Wellendurchmesser 46 auf. In dem montierten Zustand liegt das als beweglicher Innenring 26 ausgebildete zweite Lagerelement 20 mit einer Oberseite an dem Wellenabsatz 42 an. In dem montierten Zustand ist das zweite Lagerelement 20 in axialer Richtung der Lagerachse 22 mittels der Wellenhülse 48 an der Rührwelle 14 befestigt. Eine Differenz zwischen einem Außendurchmesser und einem Innendurchmesser des beweglichen Innenrings 26 entspricht zumindest im Wesentlichen einer Differenz zwischen dem ersten Wellendurchmesser 44 und dem zweiten Wellendurchmesser 46 der Rührwelle 14. Ein Innendurchmesser des stationären Außenrings 24 entspricht zumindest im Wesentlichen dem ersten Wellendurchmesser 44 der Rührwelle 14.

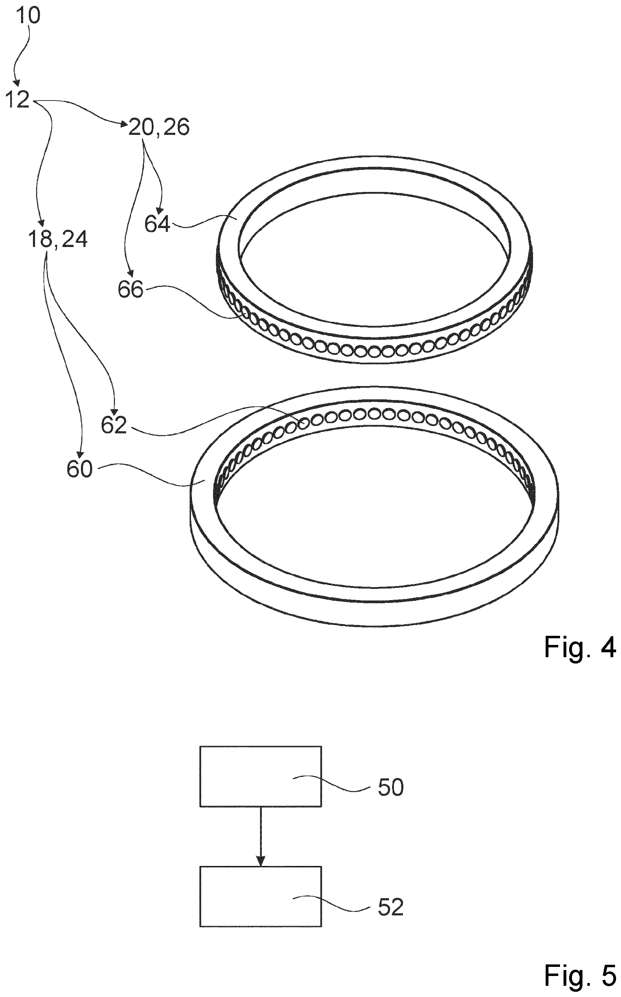

Figur 4 zeigt das erste Lagerelement 18 und das zweite Lagerelement 20 des Zwischenlagers 12 in einer schematischen Explosionsdarstellung. Das als stationärer Außenring 24 ausgebildete erste Lagerelement 18 weist einen ersten Grundkörper 60 auf. Das als stationärer Außenring 24 ausgebildete erste Lagerelement 18 weist zumindest ein erstes Kontaktelement 62 auf. Vorliegend weist das erste Lagerelement 18 eine Vielzahl von ersten Kontaktelementen 62 auf. Die ersten Kontaktelemente 62 sind in zueinander regelmäßigen Abständen entlang einer Umfangsrichtung an einer Innenseite des ersten Grundkörpers 62 angeordnet.

Das als beweglicher Innenring 26 ausgebildete zweite Lagerelement 20 weist einen zweiten Grundkörper 64 auf. Das als beweglicher Innenring 26 ausgebildete zweite Lagerelement 20 weist zumindest ein zweites Kontaktelement 66 auf. Vorliegend weist das zweite Lagerelement 20 eine Vielzahl von zweiten Kontaktelementen 66 auf. Die zweiten Kontaktelemente 66 sind in zueinander regelmäßigen Abständen an einer Außenseite des zweiten Grundkörpers 64 angeordnet.

Von mehrfach vorhandenen Objekten ist in den Figuren jeweils nur eines mit einem Bezugszeichen versehen.

Der erste Grundkörper 60 des ersten Lagerelements 18 und der zweite Grundkörper 64 des zweiten Lagerelements 20 sind jeweils aus einem Metall und/oder aus einer Metalllegierung, vorliegend aus Titan, gefertigt. Die ersten Kontaktelemente 62 des ersten Lagerelements 18 und die zweiten Kontaktelemente 66 des zweiten Lagerelements 20 sind jeweils aus polykristallinem Diamant ausgebildet. Die ersten Kontaktelemente 62 sind form- und/oder kraftschlüssig in entsprechende Ausnehmungen in dem ersten Grundkörper 60 eingepresst. Die zweiten Kontaktelemente 66 sind ebenfalls form- und/oder kraftschlüssig in entsprechende Ausnehmungen in dem zweiten Grundkörper 64 eingepresst.

In dem Betriebszustand der Rührwerkvorrichtung 10 stehen die ersten Kontaktelemente 62 des ersten Lagerelements 18 und die zweiten Kontaktelemente 66 des zweiten Lagerelements 20 miteinander in Kontakt, wobei die zweiten Kontaktelemente 66 des als beweglicher Innenring 26 ausgebildeten zweiten Lagerelements 20 relativ zu den ersten Kontaktelementen 62 des als stationärer Außenring 24 in einer Drehbewegung um die Lagerachse 22 (vgl. Figur 3) bewegt werden.

Das Zwischenlager 12 ist zu einem Trockenlauf ausgelegt. In dem Trockenlauf stehen das erste Lagerelement 18 und das zweite Lagerelement 20, und zwar die ersten Kontaktelemente 62 des ersten Lagerelements 18 und die zweiten Kontaktelemente 66 des zweiten Lagerelements 20, in unmittelbarem Kontakt und es herrscht Festkörperreibung zwischen den ersten Kontaktelementen 62 und den zweiten Kontaktelementen 66. In dem Trockenlauf beträgt ein Reibungskoeffizient zwischen dem ersten Lagerelement 18 und dem zweiten Lagerelement 20, und zwar zwischen den ersten Kontaktelementen 62 des ersten Lagerelements 18 und den zweiten Kontaktelementen 66 des zweiten Lagerelements 20, höchstens 0,08.

Das Zwischenlager 12 ist zudem auch zu einem Nasslauf ausgelegt. In dem Nasslauf ist das Zwischenlager hydrodynamisch geschmiert und zwar durch das in dem Rührbehälter 16 befindliche Medium 32 (vgl. Figur 1). In dem Nasslauf bildet sich ein hydrodynamischer Schmierfilm zwischen den ersten Kontaktelementen 62 des ersten Lagerelements 18 und den zweiten Kontaktelementen 66 des zweiten Lagerelements 20 aus. In dem Nasslauf beträgt der Reibungskoeffizient zwischen dem ersten Lagerelement 18 und dem zweiten Lagerelement 20, und zwar zwischen den ersten Kontaktelementen 62 des ersten Lagerelements 18 und den zweiten Kontaktelementen 66 des zweiten Lagerelements 20, höchstens 0,002.

Das erste Lagerelement 18 und das zweite Lagerelement 20 weisen jeweils eine Druckfestigkeit von zumindest 5 GPa auf. Vorliegend weisen das erste Lagerelement 18 und das zweite Lagerelement 20 jeweils eine Druckfestigkeit zwischen 6,9 GPa und 7,6 GPa auf. Hierdurch kann eine zuverlässige Aufnahme von in dem Betriebszustand wirkenden radialen Kräften von der Rührwelle 14 durch das Zwischenlager 12 erreicht werden.

Das Zwischenlager 12 weist eine Hitzebeständigkeit von zumindest 250°C auf. Das erste Lagerelement 18 und das zweite Lagerelement 20, und zwar insbesondere die ersten Kontaktelemente 62 des ersten Lagerelements 18 und die zweiten Kontaktelemente 66 des zweiten Lagerelements 20, weisen zudem jeweils eine Wärmeleitfähigkeit von zumindest 400 W/mK auf. Vorliegend weisen die ersten Kontaktelemente 62 des ersten Lagerelements 18 und die zweiten Kontaktelemente 66 jeweils eine Wärmeleitfähigkeit von 543 W/mK auf. Durch die hohen Wärmeleitfähigkeiten kann in dem Betriebszustand, und zwar insbesondere beim Starten und Stoppen der Rührwelle 14 sowie in dem Trockenlauf, eine gute und schnelle Wärmeabfuhr von Reibungswärme erreicht werden, sodass die Wahrscheinlichkeit von ungewolltem lokalen Reibschweißen zwischen den Kontaktelementen 62, 66 des ersten Lagerelements 18 und des zweiten Lagerelements 20, was zu einer Riefenbildung und Abrieb und damit zu vorzeitigem Verschleiß führen würde, reduziert, vorzugsweise minimiert, werden.

Figur 5 zeigt ein schematisches Verfahrensfließbild eines Verfahrens zum Betrieb des Rührsystems 30, wobei der Rührbehälter 16 mit einem korrosiven und/oder abrasiven Medium 32 gefüllt ist und wobei das Medium 32 eine Temperatur von zumindest 180°C aufweist. Das Verfahren umfasst zumindest zwei Verfahrensschritte. In einem ersten Verfahrensschritt 50 des Verfahrens wird das Rührsystem 30 in Betrieb genommen, wobei der Rührbehälter 16 mit dem korrosiven und/oder abrasiven Medium 32 befüllt und das Medium auf eine Temperatur von zumindest 180°C aufgeheizt wird. Vorliegend wird das Medium 32 eine Temperatur zwischen 190°C und 210°C aufgeheizt. Bei der Produktion von Terephthalsäure kann es sich bei dem korrosiven und/oder abrasiven Medium 32 beispielsweise um Essigsäure handeln. In einem zweiten Verfahrensschritt 52 wird das Medium 32 in dem Rührbehälter 16 mittels der Rührorgane 36 gerührt. Zur Herstellung von Terephthalsäure wird dabei beispielsweise para-Xylol kontinuierlich mit Luftsauerstoff in Essigsäure als Lösungsmittel bei ca. 15 bar gerührt und dabei katalytisch oxidiert, bis Terephthalsäure in fester Form ausfällt.

### Bezugszeichen

- 10: Rührwerkvorrichtung
- 12: Zwischenlager
- 14: Rührwelle
- 16: Rührbehälter
- 18: erstes Lagerelement
- 20: zweites Lagerelement
- 22: Lagerachse
- 24: stationärer Außenring
- 26: beweglicher Innenring
- 30: Rührsystem
- 32: Medium
- 34: Rührwerk
- 36: Rührorgan
- 38: Lagergehäuse
- 40: Befestigungsstift
- 42: Wellenabsatz
- 44: erster Wellendurchmesser
- 46: zweiter Wellendurchmesser
- 48: Wellenhülse
- 50: erster Verfahrensschritt
- 52: zweiter Verfahrensschritt
- 54: Antriebseinheit
- 56: Rührachse
- 58: Befestigungsstrebe
- 60: erster Grundkörper
- 62: erstes Kontaktelement
- 64: zweiter Grundkörper
- 66: zweites Kontaktelement

## Patentansprüche

1. Rührwerk, mit einer Rührwelle (14), und mit zumindest einem Zwischenlager (12), welches die Rührwelle (14) innerhalb eines Rührbehälters (16) lagert und welches ein erstes Lagerelement (18) und ein zweites Lagerelement (20) aufweist, welches in einem Betriebszustand relativ zu dem ersten Lagerelement (18) um eine Lagerachse (22) drehbar ist und mit dem ersten Lagerelement (18) in Kontakt steht, **dadurch gekennzeichnet, dass** zumindest eines der Lagerelemente (18, 20) polykristallinen Diamant aufweist, wobei das Zwischenlager (12) als ein Radiallager ausgebildet ist, und wobei das erste Lagerelement (18) als ein stationärer Außenring (24) und das zweite Lagerelement (20) als ein beweglicher Innenring (26) ausgebildet ist.

2. Rührwerk nach Anspruch 1, **dadurch gekennzeichnet, dass** beide Lagerelemente (18, 20) polykristallinen Diamant aufweisen.

3. Rührwerk nach Anspruch 1 oder 2, **dadurch gekennzeichnet, dass** das Zwischenlager (12) zu einem Trockenlauf ausgelegt ist.

4. Rührwerk nach Anspruch 3, **dadurch gekennzeichnet, dass** ein Reibungskoeffizient zwischen dem ersten Lagerelement (18) und dem zweiten Lagerelement (20) im Trockenlauf höchstens 0,08 beträgt.

5. Rührwerk nach einem der vorhergehenden Ansprüche, **dadurch gekennzeichnet, dass** das erste Lagerelement (18) und das zweite Lagerelement (20) eine Druckfestigkeit von zumindest 5 GPa aufweisen.

6. Rührwerk nach einem der vorhergehenden Ansprüche, **dadurch gekennzeichnet, dass** das erste Lagerelement (18) und das zweite Lagerelement (20) eine Wärmeleitfähigkeit von zumindest 400 W/mK aufweisen.

7. Rührwerk nach einem der vorhergehenden Ansprüche, **dadurch gekennzeichnet, dass** das Zwischenlager (12) eine Hitzebeständigkeit von zumindest 250°C aufweist.

8. Rührsystem (30), insbesondere Reaktor, mit einem Rührbehälter (16) und einem in dem Rührbehälter (16) angeordneten Rührwerk nach einem der vorhergehenden Ansprüche.

9. Verfahren zum Betrieb eines Rührsystems (30) nach Anspruch 8, wobei der Rührbehälter (28) mit einem korrosiven und/oder abrasiven Medium (32) gefüllt ist.

10. Verfahren nach Anspruch 9, **dadurch gekennzeichnet, dass** das Medium (32) eine Temperatur von zumindest 180°C aufweist.

## Claims

1. Agitator, with an agitator shaft (14) and with at least one intermediate bearing (12) supporting the agitator shaft (14) within an agitation tank (16) and having a first bearing element (18) and a second bearing element (20) which, in an operating state, is rotatable relative to the first bearing element (18) around a bearing axis (22) and is in contact with the first bearing element (18), **characterized in that** at least one of the bearing elements (18, 20) comprises polycrystalline diamond, wherein the intermediate bearing (12) is configured as a radial bearing, and wherein the first bearing element (18) is configured as a stationary outer ring (24) and the second bearing element (20) is configured as a movable inner ring (26).

2. Agitator as claimed in claim 1, **characterized in that** both bearing elements (18, 20) have polycrystalline diamond.

3. Agitator as claimed in claim 1 or 2, **characterized in that** the intermediate bearing (12) is designed for dry running.

4. Agitator as claimed in claim 3, **characterized in that** a coefficient of friction between the first bearing element (18) and the second bearing element (20) during dry running is at most 0.08.

5. Agitator as claimed in any one of the preceding claims, **characterized in that** the first bearing element (18) and the second bearing element (20) have a compressive strength of at least 5 GPa.

6. Agitator as claimed in any one of the preceding claims, **characterized in that** the first bearing element (18) and the second bearing element (20) have a thermal conductivity of at least 400 W/mK.

7. Agitator as claimed in any one of the preceding claims, **characterized in that** the intermediate bearing (12) has a heat resistance of at least 250°C.

8. Agitation system (30), in particular reactor, having an agitation tank (16) and having an agitator as claimed in any one of the preceding claims arranged in the agitation tank (16).

9. Method for operating an agitation system (30) as claimed in claim 8, wherein the agitation tank (28) is filled with a corrosive and/or abrasive medium (32).

10. Method as claimed in claim 9, **characterized in that** the medium (32) is at a temperature of at least 180°C.

## Revendications

1. Agitateur, comprenant un arbre d'agitation (14), et comprenant au moins un palier intermédiaire (12) qui supporte l'arbre d'agitation (14) à l'intérieur d'un récipient d'agitation (16) et qui présente un premier élément de palier (18) et un deuxième élément de palier (20) qui, dans un état de fonctionnement, peut tourner par rapport au premier élément de palier (18) autour d'un axe de palier (22) et est en contact avec le premier élément de palier (18), **caractérisé en ce qu'**au moins l'un des éléments de palier (18, 20) présente du diamant polycristallin, le palier intermédiaire (12) étant réalisé sous forme de palier radial, et le premier élément de palier (18) étant réalisé sous forme de bague extérieure stationnaire (24) et le deuxième élément de palier (20) étant réalisé sous forme de bague intérieure mobile (26).

2. Agitateur selon la revendication 1, **caractérisé en ce que** les deux éléments de palier (18, 20) présentent du diamant polycristallin.

3. Agitateur selon la revendication 1 ou 2, **caractérisé en ce que** le palier intermédiaire (12) est conçu pour un fonctionnement à sec.

4. Agitateur selon la revendication 3, **caractérisé en ce qu'**un coefficient de frottement entre le premier élément de palier (18) et le deuxième élément de palier (20) dans le fonctionnement à sec est d'au plus 0,08.

5. Agitateur selon l'une quelconque des revendications précédentes, **caractérisé en ce que** le premier élément de palier (18) et le deuxième élément de palier (20) présentent une résistance à la compression d'au moins 5 GPa.

6. Agitateur selon l'une quelconque des revendications précédentes, **caractérisé en ce que** le premier élément de palier (18) et le deuxième élément de palier (20) présentent une conductivité thermique d'au moins 400 W/mK.

7. Agitateur selon l'une quelconque des revendications précédentes, **caractérisé en ce que** le palier intermédiaire (12) présente une résistance à la chaleur d'au moins 250 °C.

8. Système d'agitation (30), en particulier réacteur, comprenant un récipient d'agitation (16) et un agitateur selon l'une quelconque des revendications précédentes disposé dans le récipient d'agitation (16).

9. Procédé pour faire fonctionner un système d'agitation (30) selon la revendication 8, le récipient d'agitation (28) étant rempli d'un milieu corrosif et/ou abrasif (32).

10. Procédé selon la revendication 9, **caractérisé en ce que** le milieu (32) présente une température d'au moins 180 °C.
